Europäisches Patentamt

(19) European Patent Office

Office européen des brevets

(11) Publication number: **0 066 014**

A1

(12) **EUROPEAN PATENT APPLICATION**

(21) Application number: **81201109.6**

(22) Date of filing: **06.10.81**

(51) Int. Cl.³: **B 25 J 9/00**

(30) Priority: **03.06.81 IT 6775581**

(43) Date of publication of application:
**08.12.82 Bulletin 82/49**

(84) Designated Contracting States:
**BE DE FR GB NL SE**

(71) Applicant: **COMAU S.p.A.**
**Via Rivalta 30**
**I-10095 Grugliasco (Torino)(IT)**

(72) Inventor: **Bianco, Paolo**
**Corso Unione Sovietica, 256**
**Torino(IT)**

(72) Inventor: **Romagnoli, Alessandro**
**Corso Orbassano, 215**
**Torino(IT)**

㉒ Inventor **Roscio, Mario**
**Corso Unione Sovietica, 493**
**Torino(IT)**

(74) Representative: **Lotti, Giorgio**
**c o Ing. Barzano' & Zanardo S.p.A. Via Cernaia 20**
**I-10122 Torino(IT)**

(54) **Manipulator with two opposing arms.**

�된 A manipulator comprises two rigid arms in diametrically opposite positions about the axis around which they rotate through 180° on a base. To the end of each arm there is connected a working head which can translate along the axis of the arms to assume two positions, namely an extended position and a retracted position, the working heads (robots) carry gripper or sucker support units which can be positioned about mutually perpendicular axes.

One application of the manipulator is to simultaneously pick up and deposit, by means of the grippers or suckers carried by the two heads, pieces being worked in successive presses of the production line in which the manipulator is disposed. On termination of this operation, the heads are retracted, the arms are rotated through 180°, and the heads are then extended in order to each carry out the reverse operation to the preceding. The presses operate on the workpiece during the rotation of the arms.

Fig.1

EP 0 066 014 A1

MANIPULATOR WITH TWO OPPOSING ARMS.

The invention relates to a manipulator with two opposing arms. The proposed manipulator consists substantially of a base on which there rotate two diametrically opposing arms which at their ends comprise holding members or the like such as grippers or suckers which can be variously positioned about mutually perpendicular axes and which can translate along the axis of the arms. Reference will be made hereinafter to grippers for simplicity, but the holding members can be of other types.

The main object of the invention is to propose a manipulator suitable for simultaneously picking up with one gripper and depositing with the opposite gripper, workpieces which are at a considerable distance apart. The arms then rotate through 180° and again simultaneously deposit and pick up the workpieces. With the manipulator according to the invention, this takes place in a very short time and without any manual intervention other than for programming the working cycle on an appropriate control unit connected to the manipulator. The proposed manipulator is designed in particular, but not exclusively, for simultaneously picking up and depositing pieces to be worked in presses. It will therefore be assumed to operate in a line in which a certain number of presses are positioned at a distance apart equal to the working range of the manipulator according to the invention. One manipulator is disposed between each pair of adjacent presses so that the presses and manipulators alternate. There is thus a very strict relationship between each working operation, in that while one arm of a manipulator withdraws a worked piece from a press, the other arm feeds a piece which has been previously
withdrawn from the adjacent press, this being repeated for
the entire line.

As the withdrawal, rotation and depositing stages can be  ·
regulated such that they take place in a time which allows the
fed presses a four second working rate, it will be immediately
apparent that this manipulator enables all the pressing operations
on a workpiece to be carried out in a very short time, as idle
times are reduced to a minimum.

The proposed manipulator also provides for raising or
lowering and rotating the workpiece during the rotation of the
arm between the press from which the workpiece is withdrawn
and the press in which it is to be subsequently worked, in order
to attain the main object of eliminating idle time between one
operation and the next, this latter being able to be carried out
without the workpiece having firstly to be correctly positioned
and orientated under the press on to which it is deposited.

These and further objects are attained by a manipulator
characterised by comprising a base, a support carried by said
base and rotating about an axis perpendicular thereto, and two rigid
arms extending from said support in diametrically opposite
directions about the axis of rotation of the support with which
they are integral, each arm carrying at its free end a working
head operating with a sequence of movements of several degrees of
freedom and connected to the relative arm by linkages which allow
the working heads to move with translatory motion parallel to
themselves along the arm axes in order to assume end positions
which are retracted and extended respectively, there being provided
actuator means for effecting the rotary and translatory movements of said elements, and control apparatus for sequentially controlling said actuators.

A description is given hereinafter by way of non-limiting . example of the manipulator according to the invention with reference to the accompanying drawings in which:

Figures 1, 2 and 3 are perspective views of the manipulator according to the invention in three different operating positions.

Figures 4 and 5 are partly sectional elevation and plan views respectively of the manipulator

Figure 6 is a partly sectional enlarged view of a detail of Figure 4

Figures 7 and 8 are diagrams showing the pattern of rotational movement of the arms and of translational movement of the units which hold the workpiece.

Structurally, the apparatus according to the invention comprises a base 10 on which a rigid element with two opposing arms 11 is mounted so that it can rotate. Axially to the direction of rotation, the two arms 11 carry a column 9 which is vertical in the figure but which can be variably positioned.

Two connecting rods 12 are hinged at 13 to the end of each arm 11, and are hinged at their other end 14 to two further connecting rods 15. These latter are pivoted at 16 to a support 17, to which means are rotationally connected, as will be seen hereinafter, for moving a member 18 for holding the workpiece, and which is also variably rotatable, as illustrated hereinafter.

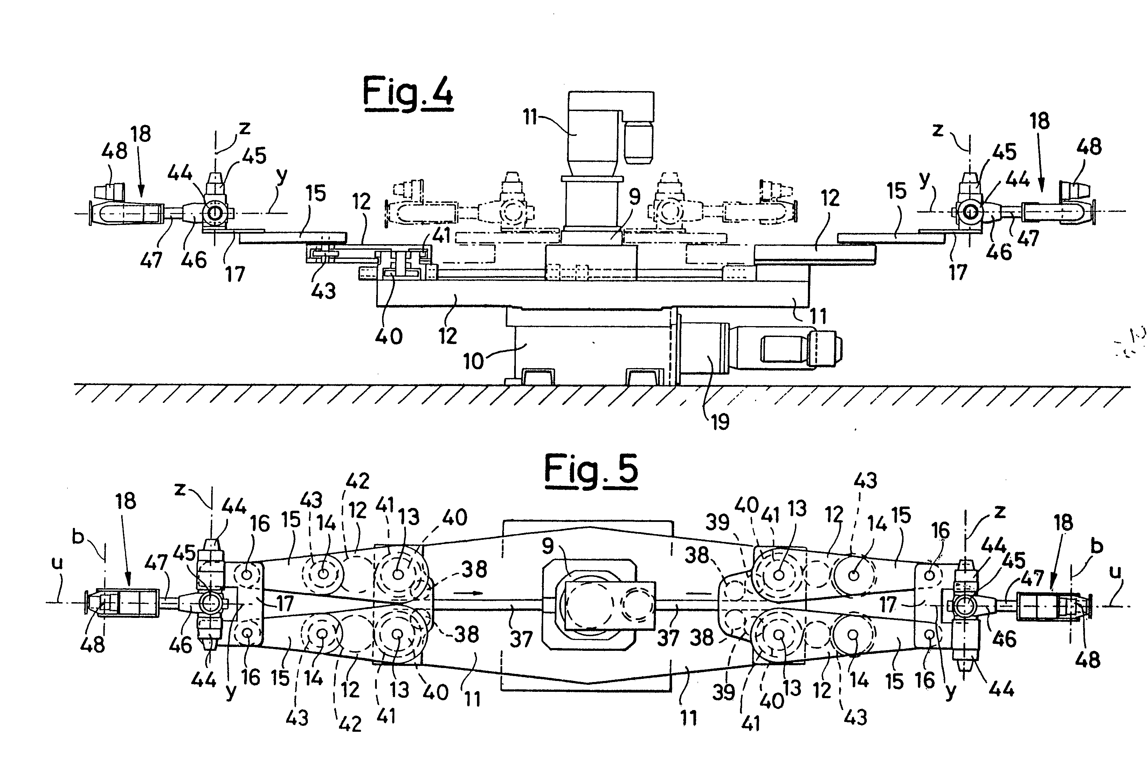

Figures 4, 5 and in particular 6 show the members for moving the various constituent elements of the manipulator.

The base 10 carries a motor 11, the shaft of which transmits rotary motion to a bevel gear pair 20 which rotates a gear wheel 21. This latter engages in a ring gear 22 which is rotationally connected by means of bearings 23 to the fixed casing 24. A gear carrier 25 is connected to the ring gear 22, and lowerly carries a gear wheel 26 engaging in a gear wheel 27 fixed to the base. Upperly, the gear carrier 25 is provided with a pin 28 slidable in a slot 29 provided in the table or support 30 from which the arms 11 extend. The support 30 is rotatably connected at 23 to the base. The column 9, on which a motor 31 is fixed, is mounted on the table or support 30. The motor shaft 32 rotates (non-aligned) a gear wheel 33 which engages in a ring gear 34 of the column 9. A gear carrier 35 is connected lowerly to the gear wheel 33, and comprises a stem 36, the axis of which cuts the pitch circle diameter of the gear wheel 33, and which is connected to a rack 37. The rack 37 is mounted slidably in the column 9 and in a compartment of the table 30, and extends over the entire length of the arms 11.

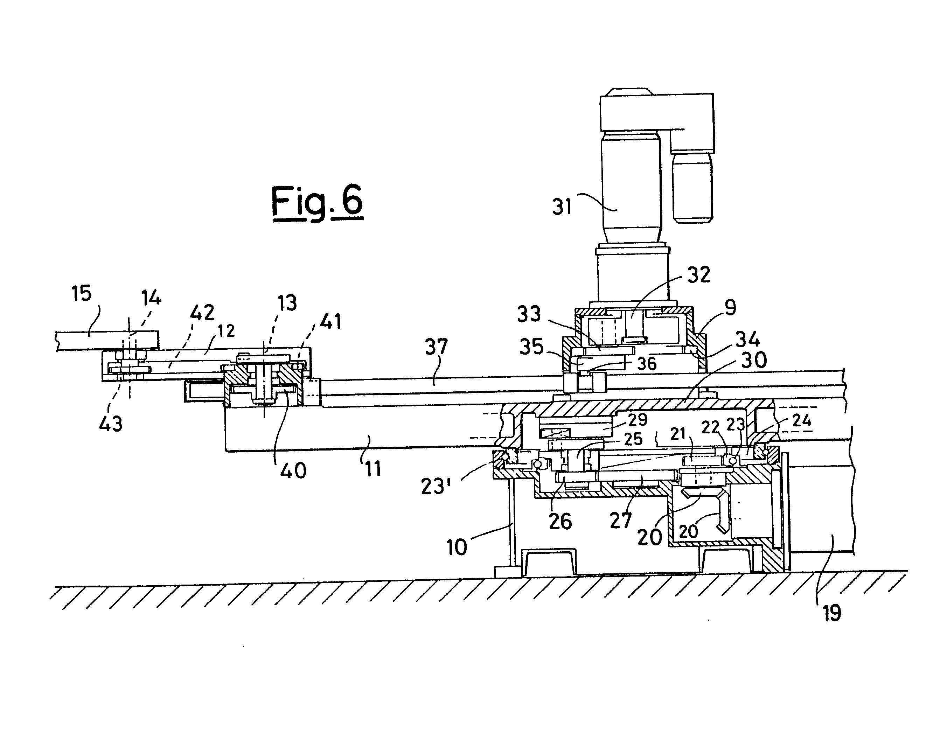

At its ends, the rack engages in gear wheels for the purpose of rotating the connecting rods 12. Reference should be made in particular to the right hand end of the rack 35 in Figure 5. A first pair of gear wheels 38 transmits rotary motion by way of a gear wheel 39 to a second pair 40, with which one end of the connecting rod 12 is rigid. The axis of rotation of the third pair 40 of gear wheels coincides with the axis 13 on which the connecting rods 12 are hinged to the arm 11. One of the two connecting rods 12 (the lower one in Figure 5) is simply hinged at 14 to the second connecting rod 15, which is thus idle on its hinge. The other connecting rod 12 (the upper one in Figure 5, also visible in Figure 6 with regard to the connecting rod 12 of the opposite arm) comprises a second gear wheel 41, the axis of which coincides with the axis of the gear wheel 40 which is rigid with the arm 11. In this gear wheel there engages a further gear wheel 42, and in this latter there engages a further gear wheel 43 which is rigid with the second connecting rod 15, and has its axis of rotation coinciding with the hinging axis 14 between the connecting rods 15 and 12. In this manner, a guided mutual movement of the two connecting rods 12 and 15 is obtained, and these consequently determine a likewise guided mutual rotary movement of the other two adjacent connecting rods 12 and 15, in that they are idle with respect to each other.

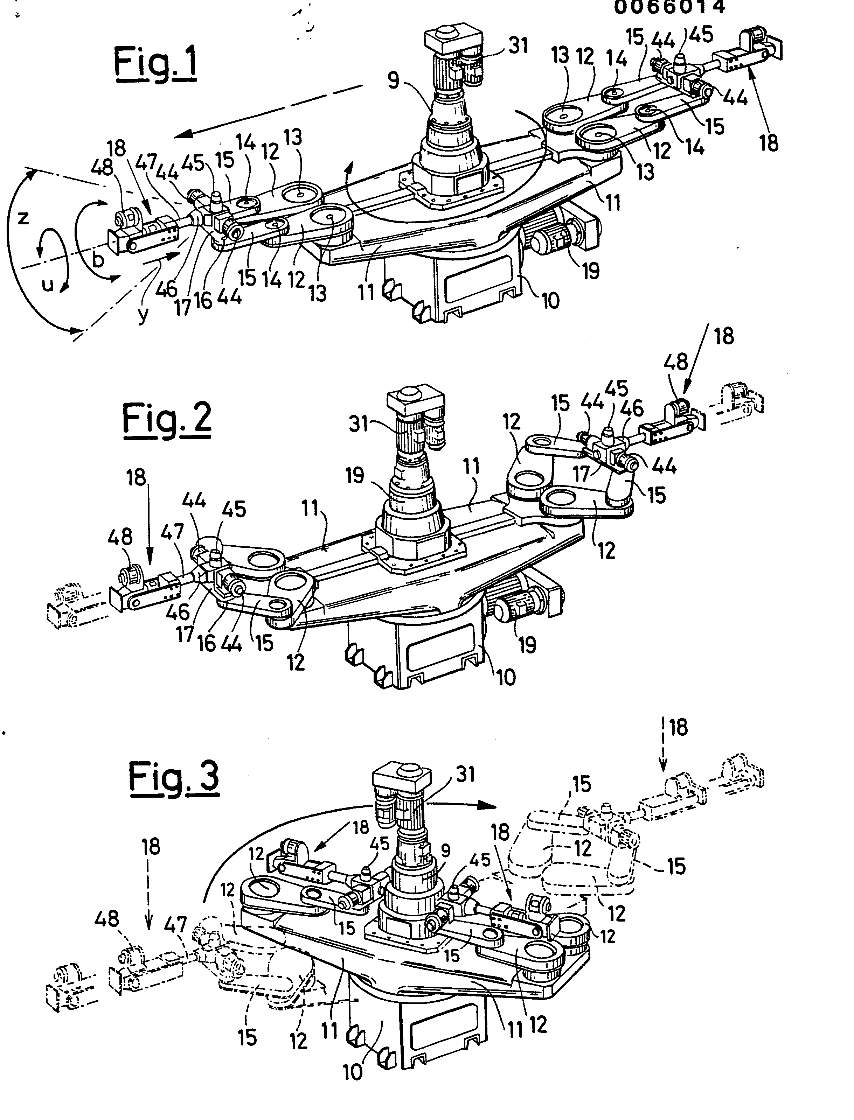

In the case of the opposite arm to that illustrated (the left hand of Figure 5), the only difference is that instead of two pairs of gear wheels 38 and 39, there is only one pair 38, so that the directions of rotation of the pairs of connecting rods at the two ends of the arms 11 are the reverse of each other, whether the rack 37 moves from one side or from the other, as can also be seen in Figures 2 and 3.

Two supports 17, each carrying three motors of which two, 44, are horizontal and a third, 45, is vertical, are hinged at 16 to the ends of the connecting rods 15, as stated. One of the two motors 44 enables the central block 46, which carries the motor 45 and the end gripper unit 18, to rotate about a horizontal axis z.

The second horizontal motor 44 rotates the gripper unit 18 about an axis b.

The third motor 45 causes the gripper 18 to translate along an axis y, coaxial to the axis u, by extending a telescopic rod 47.

Finally, a motor 48 disposed on the gripper unit 18 rotates the gripper about a longitudinal axis u perpendicular to the preceding.

As the rotational movements about said axes z, u, y and b are actuated by means of a programmable cycle control unit of the type normally used for moving grippers on robots of the type commercially available at the present time, the linkages which execute these rotations are not shown in detail as they are known to any expert of the art.

Figures 1, 2 and 3 show three operating positions of the manipulator. In Figure 1, the connecting rods 12 and 15 are disposed with their axes coinciding with that of the arms 11, and thus maximum extension has been attained with maximum distance between the two grippers (not shown) disposed at the ends of the respective gripper units 18. In this position, a gripper can withdraw the workpiece from a press, while the opposite gripper can deposit the previously picked-up workpiece on to the opposite press.

Figure 2 shows an immediately subsequent position in which one gripper has picked up its workpiece and the other gripper has deposited its workpiece, and the grippers have been retracted by rotating the connecting rods 12 and 15. As can be seen, the simultaneous elbow-type rotation of the connecting rods 12 and 15 causes the gripper units 18 to translate along the axis of the arms 11, i.e. parallel to themselves. In this manner the grippers are extracted from the respective presses among which they operate, and in which they have respectively withdrawn and deposited the workpieces.

Figure 3 shows the next operation, i.e. in which the arms 11 are rotated about the axis on which they are hinged to the base.

During this stage, the presses carry out the required operation on the workpieces which they have received from the manipulators. The arms 11 rotate through $180°$, i.e. until the two arms 11 reach positions opposite to the preceding ones, so that if the rotation and press cycle times have been correctly calculated, when the rotation is complete, the gripper which had previously withdrawn the workpiece from an upstream press now deposits it on the downstream press, whereas the gripper which had previously deposited the workpiece on the downstream press now withdraws a workpiece from the upstream press. This happens in this manner because the line consists of several presses, and a manipulator according to the invention is disposed between each pair of adjacent presses.

As seen, the motor 19 causes the arms 11 to rotate through $180°$ about the base 10.

The interposed linkage causes cycloidal motion. This is because the rotation of the ring gear 22, caused by the gear wheel 21, drives the gear carrier 25 about the fixed wheel 27, and this rotates the table 30 carrying the arms 11, by virtue of the fact that the pin 28 engages in the slot 29. However, because of this particular gear arrangement, the pin 28 slides in the slot 29 between a left hand end position and a right hand end position, in which the table is in the position shown and rotated through $180°$ respectively.

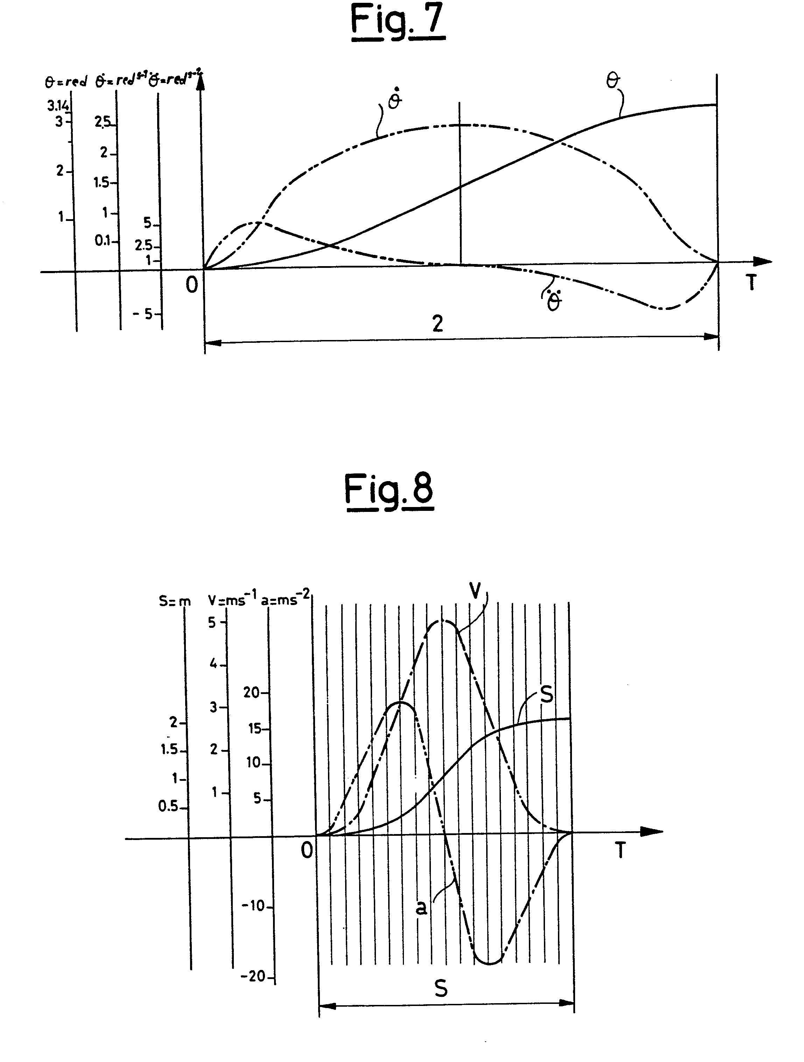

Figure 7 shows the pattern of this motion, in which $\theta$ indicates

the displacement, $\dot{\theta}$ the velocity and $\ddot{\theta}$ the acceleration.

This motion, which follows a cycloidal relationship, is determined in order to reduce to zero the force and the moments due to the table inertia during the starting and stopping stages thereof, as can be seen from the graph.

The same applies to the translation of the rack 37, which as it slides causes the connecting rods 12 and 15 to rotate and thus the gripper support units 18 to retract or extend. In this respect, the motor 31 causes the shaft 32 to rotate, and this causes the gear wheel 33 to rotate about the ring gear 34. The stem 36 of the gear carrier 35 effects a to-and-fro movement which from the left hand position (of Figure 6) carries it to the opposite position about the axis of the drive shaft in the column 9, during which the connecting rods 12 and 15 are extended (Figure 1), undergo retraction (Figure 2) and are completely retracted (Figure 3).

In this respect, as stated, when the rack 37 translates driven by the stem 36, it rotates the gear wheels 38, 39 and 40 of the connecting rods 12, which thus rotate.

This motion is also of harmonic type, as can be seen in Figure 8, in which S indicates the stroke of the units 18, V the velocity and a the acceleration. Again, as can be seen, the forces on the connecting rods during the starting and stopping of their rotation, and due to the inertia of the units 18, are reduced to zero as shown on the graph.

The stability of the gripper support units 18 at all times during their withdrawal from and approach to the presses is ensured by the gears 41, 42 and 43 present in one of the two connecting rods 12 and 15 of each arm 11, in that the relative rotation of the two connecting rods 12 and 15 concerned is guided in order to ensure a correct and precise rotation which develops as shown in Figure 2, i.e. by means of an outwardly pointing elbow linkage rather than by inwardly directed rotation which would obstruct translation when adjacent connecting rods touch each other.

As stated, the axes of rotation z, u and b and the axis of translation y of the units 18 facilitate the holding and positioning of the piece during its movement from one press to the press in which it is to be subsequently worked, thus still further shortening idle times, and in addition no manual intervention is required along the press line.

Modifications of both a formal and structural character can be made to the preferred embodiment of the manipulator heretofore described, such as to the linkages and crank mechanisms which effect the various translatory and rotary movements of the members, but without leaving the scope of the invention, as protected by the following claims.

WHAT WE CLAIM IS

1. A manipulator characterised by comprising a base, a support carried by said base and rotating about an axis perpendicular thereto, and two rigid arms extending from said support in diametrically opposite directions about the axis of rotation of the support with which they are integral, each arm carrying at its free end a working head operating with a sequence of movements of several degrees of freedom and connected to the relative arm by linkages which allow the working heads to move with translatory motion parallel to themselves along the arm axes in order to assume end positions which are retracted and extended respectively, there being provided actuator means for effecting the rotary and translatory movements of said elements, and control apparatus for sequentially controlling said actuators.

2. A manipulator as claimed in claim 1, characterised in that the base rests on the ground, and the axis of rotation of the support carrying the arms is vertical.

3. A manipulator as claimed in claim 1, characterised in that the rotary motion of the support takes place in accordance with a cycloidal relationship through an angle of 180° by means of a bevel gear pair rotated by a motor and carrying rigid therewith a gear wheel engaging in a ring gear, said ring gear driving a gear carrier about a gear wheel fixed to the base, the gear carrier being provided with a pin slidable in a slot in the support pivoted to the base.

4. A manipulator as claimed in claim 1, characterised in that the working heads slidable along the arm axis are constituted by grippers or suckers mounted on units which rotate about three mutually perpendicular axes and slide along an axis which lies in a plane defined by the axis on which the heads slide along the arms and the axis on which the support rotates about the base.

5. A manipulator as claimed in claim 1, characterised in that the translatory motion of the working heads takes place in accordance with a cycloidal relationship by providing a motor, the shaft of which rotates a gear wheel about a fixed ring gear, there being connected to the gear wheel a gear carrier which carries a pin engaged with a rack, this latter translating along the arm axis and engaged at each of its ends with gear wheels keyed on to two pairs of connecting rods for each arm, these latter being hinged to a like number of connecting rods hinged to the working heads, the coupling arrangements being such that each movement of translation of the rack in one direction causes both the pairs of connecting rods to rotate in an outward direction, so retracting the heads towards the axis of rotation of the support, whereas each movement of translation in the opposite direction causes both the pairs of connecting rods to rotate in an inward direction, so extending the heads away from the axis of rotation of the support.

6. A manipulator as claimed in claim 5, characterised in that one of the two connecting rods of each pair disposed between the arm and the connecting rods hinged to the heads comprises further gears for causing said connecting rod to rotate rigidly with the adjacent one hinged to it.

Fig.1

Fig.2

Fig.3

Fig.4

Fig.5

Fig.6

# Fig. 7

# Fig. 8

## EUROPEAN SEARCH REPORT

Application number

EP 81 20 1109

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| P,X | EP-A-0 043 059 (BILSING) <br> * page 6, line 6 to page 7, line 1; claims 1,2,4,5 * | 1,2,4 | B 25 J 9/00 |
| | --- | | |
| Y | DE-A-2 630 858 (VOLKSWAGENWERK) <br> * claims 1,3 * | 1,2,4 | |
| | --- | | |
| Y | US-A-4 218 173 (COINDET et al.) <br> * the whole document * | 1,5,6 | |
| | --- | | |
| Y | US-A-3 968 885 (HASSAN et al.) <br> * claims 1,2,8 * | 1,2 | |
| | --- | | |
| A | DE-B-1 129 029 (COMPAGNIE DE SAINT GOBAIN) <br> * figure 1 * | 3,5 | |
| | --- | | TECHNICAL FIELDS SEARCHED (Int. Cl. ³) |
| A | FR-A-2 440 270 (POLYMATIC) | | B 25 J 9/00 <br> B 25 J 11/00 <br> B 23 Q 1/16 <br> B 23 Q 7/00 <br> B 65 G 47/90 <br> F 16 H 35/02 <br> B 21 D 43/10 |
| | --- | | |
| A | GB-A-2 060 556 (MAKINO) | | |
| | --- | | |
| A | US-A-4 279 560 (ITO et al.) | | |
| | --- <br> -/- | | |

The present search report has been drawn up for all claims

| Place of search | Date of completion of the search | Examiner |
|---|---|---|
| THE HAGUE | 10-09-1982 | LAMMINEUR P.C.G. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO Form 1503 03.82

European Patent
Office

**EUROPEAN SEARCH REPORT**

| | **DOCUMENTS CONSIDERED TO BE RELEVANT** | | Page 2 | |
|---|---|---|---|---|
| Category | Citation of document with indication. where appropriate, of relevant passages | Relevant to claim | CLASSIFICATION OF THE APPLICATION (Int Cl ³) | |
| A | PROCEEDINGS OF THE INTERNATIONAL SYMPOSIUM ON INDUSTRIAL ROBOTS, September 22-24, 1975, Chicago, Society of manufacturing engineers, Dearbom, (US) <br> W.O. HARRIS et al.: "Cyclic motion robots", pages 513 to 523 <br><br> ----- | | | |

TECHNICAL FIELDS
SEARCHED (Int. Cl. ³)

The present search report has been drawn up for all claims

| Place of search | Date of completion of the search | Examiner |
|---|---|---|
| THE HAGUE | 10-09-1982 | LAMMINEUR P.C.G. |